# EUROPÄISCHE PATENTSCHRIFT

(11) **EP 2 565 015 B1**
(45) Veröffentlichungstag und Bekanntmachung des Hinweises auf die Patenterteilung: **26.11.2014**
(21) Anmeldenummer: 12180342.3
(22) Anmeldetag: 13.08.2012
(51) Int. Cl.: B29C 63/04, B23Q 3/157

(54) **Vorrichtung und Verfahren zum Umrüsten von Profilummantelungsmaschinen**
Method and device for retrofitting profile cladding machines
Dispositif et procédé destinés au rééquipement de machines d'enrobage de profilés

(30) Priorität: 29.08.2011 DE 102011053064
(43) Veröffentlichungstag der Anmeldung: 06.03.2013
(73) Patentinhaber: Düspohl Maschinenbau GmbH, 33758 Schloss Holte-Stukenbrock (DE)
(72) Erfinder: Wagner, Uwe, 33335 Gütersloh (DE)
(74) Vertreter: Ter Meer Steinmeister & Partner

(56) Entgegenhaltungen:
- EP-A2- 0 997 260
- EP-A2- 1 905 535
- EP-B1- 1 713 626
- WO-A1-2006/008578

## Beschreibung

Die Erfindung betrifft eine Vorrichtung zum Umrüsten von Profilummantelungsmaschinen, die eine Förderstrecke für zu ummantelnde Profile und für jede von mehreren längs der Förderstrecke angeordneten Rollenpositionen einen einstellbaren Halter für eine auswechselbare Andruckrolle aufweisen, welche Vorrichtung ein Magazin mit einer Vielzahl von Rollenaufnahmen für in die Halter einzusetzende Andruckrollen aufweist.

Profilummantelungsmaschinen dienen dazu, Profile wie beispielsweise Zierprofile für Möbel, Türzargenprofile und dergleichen mit einem Dekormaterial, etwa einem Furnier oder einer Folie zu ummanteln. Die Profile werden in Längsrichtung über die Förderstrecke transportiert, so dass sie an den Andruckrollen vorbeilaufen. Vor der ersten Andruckrolle wird das bereits beleimte Dekormaterial als endloses Bahnmaterial zugeführt, so dass es dann mit Hilfe der Andruckrollen nach und nach an das Profil angewalzt werden kann. Die Positionen und Achsneigungen der Andruckrollen sind dabei in jeder Rollenposition entsprechend der Geometrie des zu bearbeitenden Profils einzustellen. Bei komplexeren Profilformen sind auch die Umfangsflächen der Andruckrollen so profiliert, dass eine gute Passung zwischen der Mantelfläche der Andruckrolle und einem entsprechenden Oberflächenabschnitt des Profils erreicht wird. Bei einer Umrüstung der Ummantelungsmaschine auf ein anderes Profil müssen deshalb in der Regel auch die Andruckrollen gegen solche mit anderen Profilformen ausgetauscht werden.

Da beim Umrüsten in der Regel eine große Anzahl von Andruckrollen auszutauschen und einzustellen ist, nimmt der Umrüstvorgang verhältnismäßig viel Zeit in Anspruch, was entsprechend lange Stillstandszeiten der Maschine und somit hohe Kosten verursacht.

In WO 2006/008 578 Alwerden eine Ummantelungsmaschine und eine Umrüstvorrichtung der oben genannten Art beschrieben. Die in den verschiedenen Rollenpositionen längs des Förderers angeordneten Halter für die Andruckrollen werden hier durch Roboter gebildet, so dass die Positionierung der Andruckrollen automatisiert werden kann. Das Magazin für die Andruckrollen hat die Form zweier beiderseits des Förderers verlaufender Förderstrecken, aus denen die Roboter die jeweils benötigten Andruckrollen entnehmen können. Das setzt jedoch voraus, dass sich jeweils die richtigen Andruckrollen in Reichweite des betreffenden Roboters befinden.

EP 1 905 535 beschreibt einen Umlaufförderer für Wechselwerkzeuge.

Aufgabe der Erfindung ist es, eine effiziente und bedarfsgerechte Bereitstellung der jeweils in die Halter einzusetzenden Andruckrollen zu ermöglichen.

Diese Aufgabe wird mit den in den Ansprüchen 1 und 7 angegebenen Merkmalen gelöst.

Wenn ein Roboter oder eine menschliche Arbeitskraft, die das Auswechseln der Andruckrollen von Hand vornimmt, an einer bestimmten Rollenposition eine bestimmte Andruckrolle benötigt, so kann mit Hilfe eines Umlaufförderers die Rollenaufnahme, die die benötigte Andruckrolle aufnimmt, in eine Position in der Nähe der betreffenden Rollenposition gebracht werden, so dass sie für den Arbeiter oder Roboter bequem erreichbar ist.

Wenn der Umrüstvorgang von Hand durchgeführt wird und dabei die verschiedenen Rollenpositionen eine nach der anderen abgearbeitet werden, so kann der Umlaufförderer bereits in die für die nächste Rollenposition benötigte Position fahren, während das Personal noch mit den Einstellarbeiten an der bisherigen Rollenposition beschäftigt ist. Auf diese Weise lässt sich eine beträchtliche Zeitersparnis erreichen.

Wenn die Halter in den verschiedenen Rollenpositionen durch Roboter gebildet werden, so wird der Umlaufförderer immer dann angehalten, wenn eine in irgendeiner Rollenaufnahme aufgenommene Andruckrolle die Position eines Roboters erreicht, der gerade diese Andruckrolle benötigt. Sobald der Roboter diese Andruckrolle entnommen hat, kann der Umlaufförderer seinen Weg fortsetzen, bis eine geeignete Übergabeposition für eine irgendeinen der übrigen Roboter erreicht wird. Auf diese Weise lassen sich mit höchstens einem vollständigen Umlauf des Umlaufförderers sämtliche Roboter bedienen.

Die Vorrichtung umfasst auch ein Datenverarbeitungssystem, das die Belegung der Rollenaufnahmen des Umlaufförderers mit Andruckrollen verwaltet und die Bewegungen des Umlaufförderers steuert. In dem Datenverarbeitungssystem ist auch ein Programm implementiert, das für eine gegebene Profilgeometrie, die beispielsweise in der Form von CAD-Daten eingegeben werden kann, anhand eines vorgegebenen Algorithmus die günstigste Auswahl und Positionierung der Andruckrollen bestimmt, den Umlaufförderer entsprechend ansteuert und ggf. entsprechende Anweisungen an das Personal gibt.

Vorteilhafte Weiterbildungen und Ausgestaltungen der Erfindung sind in den Unteransprüchen angegeben.

Eine besonders raumsparende Anordnung des Magazins lässt sich dadurch erreichen, dass das Magazin durch einen Umlaufförderer gebildet wird, der derart mittig unterhalb oder oberhalb der Förderstrecke angeordnet ist, dass seine sich gegenläufig zueinander bewegenden Förderabschnitte auf entgegengesetzten Seiten der Förderstrecke liegen. Der Umlaufförderer kann beispielsweise durch eine Förderkette gebildet werden, die über zwei Kettenräder läuft, die mit vertikaler Drehachse mittig unter oder über der Förderstrecke angeordnet sind. Die Rollenaufnahmen können dann einfach durch von der Kette aufragende Zapfen gebildet werden, auf welche sich die Andruckrollen aufstecken lassen.

Die Abstände zwischen den Rollenaufnahmen können deutlich kleiner sein als die Abstände zwischen den einzelnen Rollenpositionen. Auf diese Weise lässt sich auf einem einzigen Umlaufförderer eine Anzahl von Andruckrollen unterbringen, die ein Vielfaches der bei einem einzelnen Ummantelungsvorgang benötigten Anzahl beträgt. Erforderlichenfalls können auch mehrere Umlaufförderer in mehreren Etagen übereinander angeordnet werden.

Bevorzugt umfasst die Vorrichtung weiterhin Signaleinrichtungen, mit denen dem Personal beispielsweise durch Lichtsignale angezeigt wird, welche Andruckrolle in welcher Rollenposition einzusetzen ist und/oder in welche leere Rollenaufnahme des Umlaufförderers die ausgewechselte Andruckrolle zurückzulegen ist. Auf diese Weise ist im Datenverarbeitungssystem jederzeit die Information verfügbar, welche Andruckrolle sich in welcher Rollenaufnahme befindet.

Gemäß einer besonders zweckmäßigen Weiterbildung der Erfindung ist an dem Umlaufförderer an mindestens einer Stelle ein Abtasteinrichtung angeordnet, die in der Lage ist, die Profilformen der Umfangsflächen der Andruckrollen zu messen, wenn diese mit dem Umlaufförderer an der Abtasteinrichtung vorbei transportiert werden. Dadurch wird erreicht, dass im Datenverarbeitungssystem stets zuverlässige Informationen darüber verfügbar sind, welche Profilformen die in den Rollenaufnahmen abgelegten Andruckrollen aufweisen. Ein weiterer Vorteil besteht darin, dass mit Hilfe der Abtasteinrichtung auch abnutzungsbedingte Änderungen der Rollenprofile festgestellt werden können, so dass diese Änderungen bei der Auswahl der Rollen berücksichtigt werden können und/oder unbrauchbar gewordene Andruckrollen ausgemustert werden können.

Die Auswahl der Andruckrolle für eine gegebene Rollenposition erfolgt dann mit Hilfe eines Algorithmus, der die Geometrie der Oberflächenzone des Profils, in der die Andruckrolle eingesetzt werden soll, mit den gemessenen Profilformen der Andruckrollen vergleicht und jeweils diejenige Andruckrolle auswählt, für welche die beste Übereinstimmung besteht.

Dieses Verfahren ist nicht auf Vorrichtungen beschränkt, die einen Umlaufförderer nach Anspruch 1 aufweisen, sondern kann beispielsweise auch für Vorrichtungen mit statischem Magazin eingesetzt werden, bei denen dem Personal durch Signaleinrichtungen angezeigt wird, welche Rolle in welchen Halter einzusetzen ist. Ebenso ist das Verfahren bei Vorrichtungen mit statischem Magazin einsetzbar, bei denen ein längs der Förderstrecke verfahrbarer Roboter die Andruckrollen aus dem Magazin entnimmt und in der jeweils gewünschten Rollenposition in den dortigen Halter einsetzt.

Gegenstand der Erfindung ist somit auch ein Verfahren zum Umrüsten von Profilummantelungsmaschinen, die eine Förderstrecke für zu ummantelnde Profile und für jede von mehreren längs der Förderstrecke angeordneten Rollenpositionen einen einstellbaren Halter für eine auswechselbare Andruckrolle aufweisen, mit den folgenden Schritten:
- Eingabe der Geometrie des zu ummantelnden Profils in ein Datenverarbeitungssystem,
- Messen und Speichern der Profilformen mehrerer Andruckrollen, und
- für jede Rollenposition: Auswahl einer der mehreren Andruckrollen durch das Datenverarbeitungssystem, auf der Grundlage eines Vergleichs der gemessenen Profilformen mit der eingegebenen Geometrie.

Im folgenden wird ein Ausführungsbeispiel anhand der Zeichnung näher erläutert.

Es zeigen:
- Fig. 1: eine Seitenansicht einer Profilummantelungsmaschine mit einer erfindungsgemäßen Umrüstvorrichtung;
- Fig. 2: eine Seitenansicht eines einzelnen Halters für eine Andruckrolle;
- Fig. 3: zwei einander gegenüberliegende Andruckrollenhalter in der Draufsicht;
- Fig. 4: eine Ansicht in Richtung der Pfeile IV-IV in Fig. 3;
- Fig. 5: eine vergrößerte Seitenansicht eines Teils eines Umlaufförderers;
- Fig. 6: ein Ende des Umlaufförderers in der Draufsicht;
- Fig. 7(A)-(F): Anordnungen von Andruckrollen für verschiedene Stadien eines Profilummantelungsvorgangs; und
- Fig. 8: eine Skizze zur Illustration eines Verfahrens zur Auswahl einer Andruckrolle.

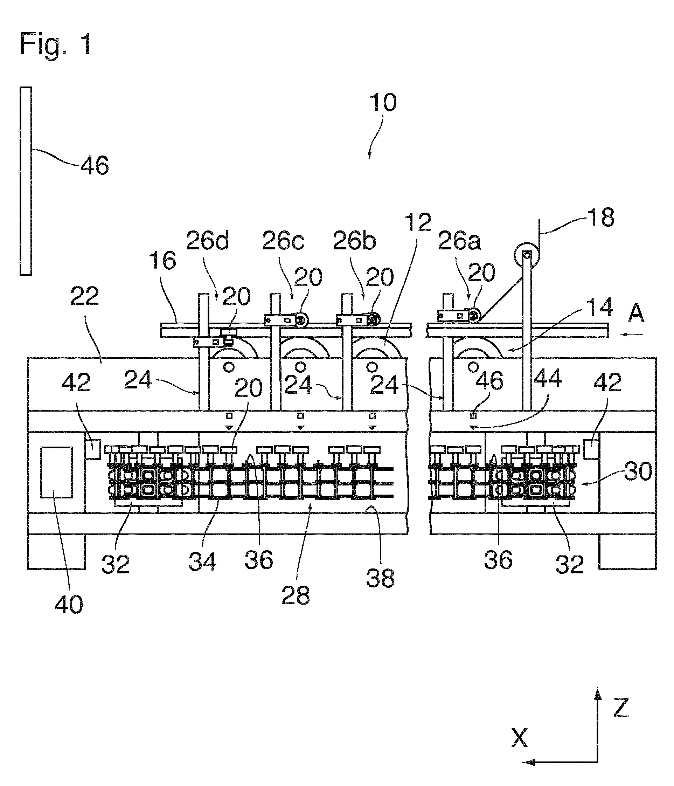

In Fig. 1 ist eine Profilummantelungsmaschine 10 gezeigt, die eine durch eine Folge von Transportrollen 12 gebildete Förderstrecke 14 für ein zu ummantelndes Profil 16 aufweist. Das Profil 16 stützt sich auf den Scheiteln der Transportrollen 12 ab und wird in Richtung des Pfeils A durch die Förderstrecke 14 transportiert. Von einer nicht gezeigten Beleimungsstation wird eine endlose Bahn eines beleimten Dekormaterials 18 auf die Oberseite des Profils 16 zugeführt. Mit Andruckrollen 20 wird das Dekormaterial 18 nach und nach an die Oberfläche des Profils 16 angewalzt.

An einem Gestell 22 der Ummantelungsmaschine sind mehrere Halter 24 angebracht, an denen jeweils eine der Andruckrollen 20 so gehalten ist, dass ihre Position und die Neigung ihrer Achse relativ zum Profil 16 einstellbar ist. Fig. 1 zeigt lediglich vier Andruckrollen 20 in über die Länge der Förderstrecke 14 verteilten Rollenpositionen 26a - 26d. In der Praxis kann jedoch eine deutlich größere Anzahl von Rollenpositionen vorhanden sein.

Ein Magazin 28 für weitere Andruckrollen 20, die je nach Bedarf an den Haltern 24 anzubringen sind, ist unterhalb der Förderstrecke 14 in das Gestell 22 integriert. Kernstück des Magazins 28 ist ein Umlaufförderer 30, der eine über zwei Kettenräder 32 laufende endlose Kette 34 aufweist. Die Kettenräder 32 sind jeweils um eine vertikale Achse drehbar und sind am stromaufwärtigen und am stromabwärtigen Ende der Förderstrecke 14 mittig unter der Förderstrecke angeordnet, so dass je ein Abschnitt der Kette 34 auf jeder Seite der Förderstrecke 14 liegt.

Die Kette 34 ist im gezeigten Beispiel eine Dreifachkette, die in vertikaler Richtung eine große Biegesteifigkeit aufweist. Erforderlichenfalls können zusätzliche Kettenräder auf der Länge der Förderstrecke 14 verteilt angeordnet sein und in die Kette 34 eingreifen, um ein Durchhängen der Kette zu vermeiden.

Zumindest einige der Gelenkachsen, die die Kettenglieder der Kette 34 gelenkig miteinander verbunden, weisen am oberen Ende eine Rollenaufnahme 36 für eine der Andruckrollen 20 auf. Jede Rollenaufnahme wird durch einen Teller gebildet, von dem in der Mitte ein Zapfen aufragt, auf den ein Achsstummel der Andruckrolle 20 aufgesteckt werden kann.

Jeder Abschnitt des Umlaufförderers 30 läuft durch eine Nische 38 des Gestells 22 und hat in dieser Nische nach oben so viel Spiel, dass die Andruckrollen 20 bequem von den Rollenaufnahmen 36 abgenommen werden können.

Wie Fig. 1 zeigt, nehmen die in den Haltern 24 gehaltenen Andruckrollen 20 unterschiedliche Positionen relativ zu dem Profil 16 ein. Im gezeigten Beispiel rollt die Andruckrolle in der Rollenposition 26a auf der oberen Oberfläche eines erhabenen Teils des Profils 16 ab, während die Andruckrolle in der Rollenposition 26b schräg gegen den erhabenen Teil des Profils angestellt ist. Die Andruckrolle in der Rollenposition 26c rollt flach auf einem tiefer abgesetzten Teil des Profils 16 ab, während die Andruckrolle in der Rollenposition 26d an einer seitlichen Flanke des Profils 16 abrollt. Auf der in Fig. 1 nicht sichtbaren Rückseite des Gestells 22 sind weitere Halter 24 mit Andruckrollen 20 vorgesehen, die den in Fig. 1 sichtbaren Haltern 24 paarweise gegenüberliegen. Die Umfangsflächen der Andruckrollen 20 sind im allgemeinen nicht zylindrisch, sondern haben eine Profilierung, die an die Geometrie des Profils 16 angepasst ist.

Wenn die Ummantelungsmaschine 10 für die Ummantelung eines Profils 16 mit einer anderen Geometrie umgerüstet werden soll, müssen somit nicht nur die Positionen der Andruckrollen 20 an den Haltern 24 neu eingestellt werden, sondern in der Regel auch die Andruckrollen gegen solche mit anderen Profilen ausgewechselt werden.

In der hier gezeigten Ausführungsform erfolgt das Auswechseln der Andruckrollen 20 von Hand, jedoch mit Unterstützung durch ein elektronisches Datenverarbeitungssystem 40, das unter anderem den Umlaufförderer 30 ansteuert.

An den entgegengesetzten Enden des Umlaufförderers 30 sind Abtasteinrichtungen 42 vorgesehen, beispielsweise 2D-Laserscanner, mit denen das Profil der Umfangsfläche jeder der Andruckrollen 20 abgetastet werden kann, wenn sich die auf dem Umlaufförderer 30 transportierte Andruckrolle an der betreffenden Abtasteinrichtung 42 vorbei bewegt. Dabei kann auch der Durchmesser der betreffenden Andruckrolle gemessen werden. Während eines halben Umlaufes des Umlaufförderers 30 können auf diese Weise die Profile und Durchmesser sämtlicher im Magazin 28 vorhandenen Andruckrollen vermessen und im Datenverarbeitungssystem 40 gespeichert werden.

Weiterhin werden in das Datenverarbeitungssystem 40 Daten eingegeben, beispielsweise CAD-Daten, die die Geometrie des als nächstes zu ummantelnden Profils 16 spezifizieren. Das Datenverarbeitungssystem 40 bestimmt dann nach einem vorgegebenen Algorithmus für jede der Rollenpositionen 26a - 26d die Zone auf der Oberfläche des Profils 16, in der die betreffende Andruckrolle 20 angreifen soll, und wählt eine Andruckrolle mit einem zu der Geometrie dieser Zone passenden Profil aus. Weiterhin bestimmt das Datenverarbeitungssystem die notwendige Einstellung des Halters 24, die dafür sorgt, dass die Andruckrolle in der richtigen Position gehalten wird.

All diese Arbeiten können bereits vorbereitend ausgeführt werden, während der aktuelle Ummantelungsprozess noch läuft, so dass, sobald dieser Ummantelungsprozess abgeschlossen ist, unverzüglich mit den Umrüstarbeiten begonnen werden kann.

Als Beispiel kann angenommen werden, dass die Umrüstarbeiten mit dem Auswechseln der Andruckrolle 20 in der Rollenposition 26a beginnen. Das Datenverarbeitungssystem 40 steuert dann den Umlaufförderer 30 so an, dass die Rollenaufnahme, die die für diese Position ausgewählte Andruckrolle 20 trägt, in eine Position unmittelbar unter der Rollenposition 26a gebracht wird. Am Gestell 22 leuchtet dann eine Markierung 44 auf, die dem Bedienungspersonal signalisiert, dass die Andruckrolle, die sich unmittelbar unter dieser Markierung befindet, von der Rollenaufnahme 36 abgenommen und in den Halter 24 eingesetzt werden soll. Die Bedienungsperson löst zunächst die noch im Halter 24 montierte Rolle aus dem Halter und setzt sie auf einer freien Rollenaufnahme 36 auf dem Umlaufförderer 30 ab. Sodann setzt sie die durch die Markierung 44 bezeichnete Andruckrolle in den Halter 24 ein. Unterdessen steuert das Datenverarbeitungssystem 40 einen großflächigen Bildschirm 46, der in gut sichtbarer Position an einer Stirnseite der Ummantelungsmaschine 10 angebracht ist, so an, dass auf diesem Bildschirm ein Bild wiedergegeben wird, das die gewünschte Position der Andruckrolle 20 relativ zu dem Profil 16 zeigt. Auf diese Weise wird der Bedienungsperson verdeutlicht, wie sie den Halter 24 einzustellen hat.

Im gezeigten Beispiel ist an dem Gestell 22 unmittelbar oberhalb der Markierung 44 ein Schalter 46 angeordnet. Durch Betätigung dieses Schalters kann die Bedienungsperson dem Datenverarbeitungssystem 40 mitteilen, dass sie die durch die Markierung 44 bezeichnete Andruckrolle 20 vom Umlaufförderer 30 abgenommen hat. Das Datenverarbeitungssystem 40 steuert daraufhin den Umlaufförderer 30 so an, dass nun die für die nächste Rollenposition 26b ausgewählte Andruckrolle unter die Markierung 44 in der Rollenposition 26b gefahren wird. Dafür kann die Zeit genutzt werden, in der das Personal noch mit der Einstellung des Halters 24 in der Rollenposition 26a beschäftigt ist. Auf diese Weise können nacheinander sämtliche Rollenpositionen abgearbeitet werden, so dass sich die nötigen Umrüstarbeiten in kürzester Zeit bewerkstelligen lassen.

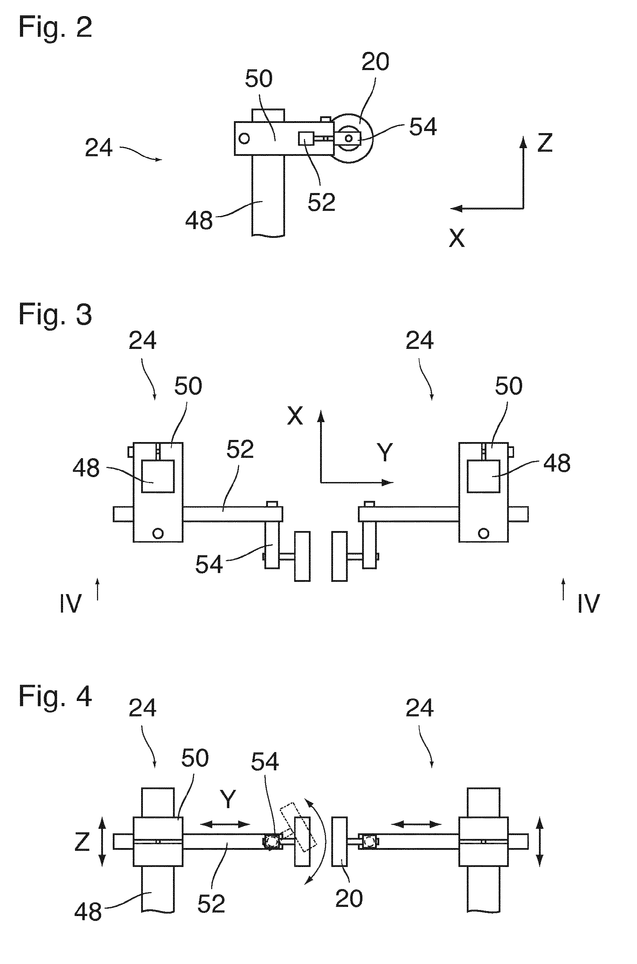

In Fig. 2 ist ein einzelner Halter 24 in einer vergrößerten Seitenansicht gezeigt. Der Halter 24 weist einen vertikalen Pfosten 48 auf, der vom Gestell 22 der Profilummantelungsmaschine aufragt. An diesem Pfosten ist eine Kreuzmuffe 50 vertikal (in Richtung der Z-Achse) verstellbar und fixierbar. In der Kreuzmuffe 50 ist ein waagerechter Arm 52 gehalten, der sich in der Richtung quer zur Förderrichtung (in Richtung der Y-Achse) nach innen bis in den Bereich der Förderstrecke 14 erstreckt. Wie deutlicher in Fig. 3 zu erkennen ist, trägt der Arm 52 am freien Ende einen Achsträger 54, in dem die Andruckrolle 20 mit ihrem Achsstummel drehbar gelagert ist.

Der Arm 52 ist in Richtung der Y-Achse in der Kreuzmuffe 50 verschiebbar und dann in der gewünschten Position fixierbar.

In Fig. 3 sind zwei Halter 24, die einander auf entgegengesetzten Seiten der Förderstrecke gegenüberliegen, in der Draufsicht gezeigt. Fig. 4 zeigt dieselben Halter 24 in einer Ansicht parallel zur X-Achse und illustriert die Einstellmöglichkeiten der Halter in Richtung der Y-Achse und der Z-Achse.

Der Achsträger 54 ist relativ zu dem Arm 52 um seine Längsachse, also um eine Achse, die parallel zur Förderrichtung der Förderstrecke 14 (X-Richtung) verläuft, drehbar und in der jeweils eingestellten Winkelstellung fixierbar. Auf diese Weise kann der Neigungswinkel der Drehachse der Andruckrolle 20 in der Y-Z-Ebene variiert werden, wie in Fig. 4 strichpunktiert angedeutet ist.

Wahlweise können der Pfosten 48 und der Arm 52 Skaleneinteilungen für die Einstellposition der Kreuzmuffe 50 in Z-Richtung, des Arms 52 in Y-Richtung und für die Winkelstellung des Achsträgers 54 aufweisen, und die entsprechenden Einstellwerte können auf dem Bildschirm 46 als Zahlenwerte angezeigt werden.

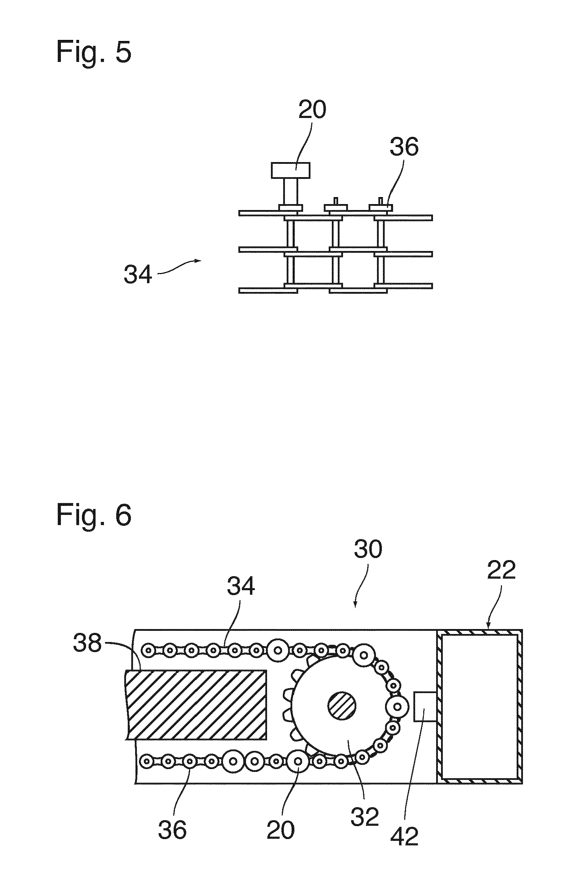

In Fig. 5 ist in einer vergrößerten Darstellung ein Abschnitt der Kette 34 des Umlaufförderers 30 gezeigt. Dieser Abschnitt weist drei Rollenaufnahmen 36 auf, von denen eine mit einer Andruckrolle 20 bestückt ist.

In Fig. 6 ist ein Ende des Umlaufförderers 30 in der Draufsicht gezeigt. Man erkennt die Anordnung der Abtasteinrichtung 42 relativ zum Kettenrad 32 sowie den Verlauf der beiden Förderabschnitte der Kette 34 in den Nischen 38 auf beiden Seiten des Gestells 22.

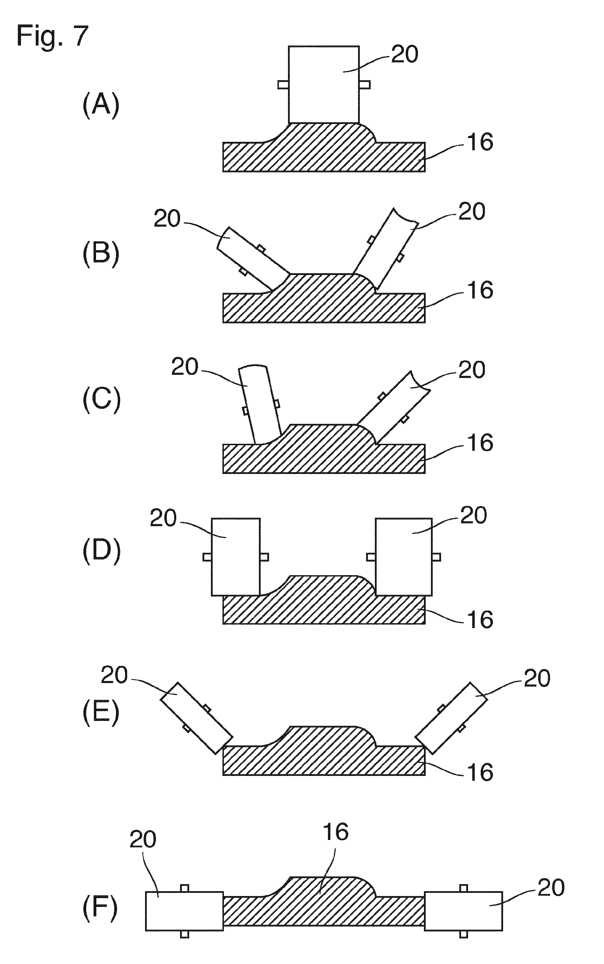

Fig. 7 zeigt ein Beispiel für die Anordnung der Andruckrollen 20 relativ zu dem hier im Querschnitt gezeigten Profil 16. Die Folge der Teilabbildungen (A) bis (F) entspricht dabei aufeinanderfolgenden Rollenpositionen in Transportrichtung des Profils 16. In der ersten Rollenposition (A) ist nur eine zylindrische Andruckrolle 20 vorgesehen, die das Dekormaterial auf der oberen Oberfläche des erhabenen Teils des Profils 16 anwalzt. In der Rollenposition (B) sind zwei Andruckrollen 20 vorgesehen, die das Dekormaterial an die Flanken des erhabenen Teils des Profils andrücken. Das Profil der Umfangsflächen dieser Andruckrollen ist an das jeweilige Flankenprofil angepasst. Dasselbe gilt für die Andruckrollen der Rollenposition (C), mit denen die Fußzonen der Flanken bearbeitet werden.

In der Rollenposition (D) werden mit zwei zylindrischen Andruckrollen 20 die flachen Oberflächenbereiche des Profils 16 beiderseits des erhabenen Profilbereichs bearbeitet. Bei den Andruckrollen 20 in der Rollenposition (E) sind die Achsen ähnlich wie in den Positionen (B) und (C) schräg angestellt. Hier wird das Dekormaterial an den Kanten des Profils 16 umgelenkt. In der Rollenposition (F) sind die Drehachsen der Andruckrollen (20) vertikal orientiert. Hier wird das Dekormaterial an die Seitenflächen des Profils 16 angewalzt.

Abbildungen ähnlich denen in Fig. 7(A) - (F) können auch auf dem Bildschirm 46 (Fig. 1) dargestellt werden, um dem Personal einen Hinweis zur Justierung der Rollen zu geben. Auf dem Bildschirm wird dabei auch die Rollenposition bezeichnet, auf die sich die gezeigte Graphik bezieht.

Der Algorithmus, mit dem in dem Datenverarbeitungssystem 40 die Positionen für die Andruckrollen 20 festgelegt und die Profile der Andruckrollen ausgewählt werden, arbeitet wie folgt.

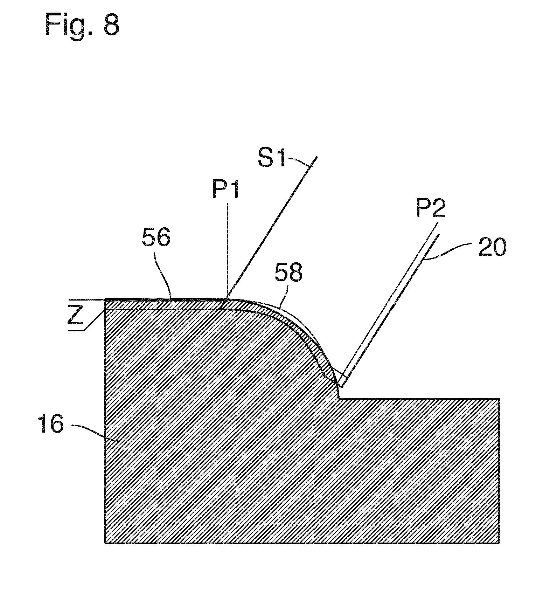

Nachdem die Geometrie des Profils 16 eingegeben worden ist, werden zunächst von der Mitte der Profiloberseite aus nach beiden Seiten nach außen fortschreitend Zonen des Profilumrisses festgelegt, die jeweils mit einer einzelnen Andruckrolle zu bearbeiten sind. Vorzugsweise werden die Zonen so gewählt, dass sie einander für die aufeinanderfolgenden Andruckrollen etwas überlappen. Für gerade verlaufende Umrisszonen werden zylindrische Andruckrollen gewählt, deren Bereite an die Breite der jeweiligen Zone angepasst ist. Für die Zonen, die eine gekrümmte Kontur haben, wie in Fig. 7 (B), müssen Andruckrollen ausgewählt werden, deren Profile möglichst gut an die Geometrie der betreffenden Zone angepasst sind. Die Profile der Umfangsflächen sämtlicher im Magazin 28 vorhandener Andruckrollen 20 wurden mit den Abtasteinrichtungen 42 gemessen und sind in einer Datenbank im Datenverarbeitungssystem gespeichert, jeweils zusammen mit der Position der Rollenaufnahme, auf der sich die betreffende Rolle befindet. Die Prozedur zur Auswahl der richtigen Andruckrolle soll nun anhand von Fig. 8 erläutert werden.

Eine flache Zone 56 des Profils 16, die in der vorangegangenen Rollenposition bearbeitet wurde, ist in Fig. 8 fett eingezeichnet. Eine nachfolgende Zone, für die nun eine Andruckrolle 20 ausgewählt werden soll, beginnt an einem Anfangspunkt P1 und endet an einem Endpunkt P2. Der Anfangspunkt P1 wird so gewählt, dass diese Zone mit der vorherigen Zone 56 etwas überlappt. Die Lage des Endpunktes P2 wird so gewählt, dass die Zone keine scharfen Ecken des Profils einschließt und dass die Variation der Neigung der Profiloberfläche in dieser Zone innerhalb gewisser Grenzen bleibt. Dadurch wird vermieden, dass der effektive Durchmesser der Andruckrolle 20 über die Breite der Zone zu stark variiert und es aufgrund der unterschiedlichen Umfangsgeschwindigkeiten zu einem Verzug des Dekormaterials kommt.

Die in der Datenbank gespeicherten Profilformen der Andruckrollen 20 werden dann der Reihe nach mit der Kontur der so bestimmten Zone zwischen P1 und P2 abgeglichen. Dazu wird im Profilbild der Andruckrolle 20 eine Hilfslinie 58 bestimmt, die gegenüber der Kontur der Umfangsfläche dieser Andruckrolle um einen bestimmten Betrag Z (in der Zeichnung übertrieben dargestellt) nach innen, also zur Achse der Andruckrolle hin verschoben ist. Die Andruckrolle 20 besteht zumindest in ihrem äußeren Umfangsbereich aus einem elastisch komprimierbaren Material. Die Hilfslinie 58 markiert die Tiefe, bis zu der die Andruckrolle maximal komprimiert werden kann.

Die Andruckrolle wird dann so an das Profil 16 angelegt, dass der Schnittpunkt der Hilfslinie 58 mit der Stirnfläche S1 der Andruckrolle mit dem Anfangspunkt P1 zusammenfällt. Anschließend wird die Andruckrolle so lange um den Anfangspunkt P1 gedreht, bis die Hilfslinie 58 auch auf der entgegengesetzten Seite der Andruckrolle an der Kontur des Profils 16 anstößt. Das muss nicht exakt am Endpunkt P2 der Fall sein. Notfalls wird die mit dieser Rolle zu bearbeitende Zone etwas verkürzt.

Die tatsächliche Umfangskontur der Andruckrolle muss dann in der gesamten Zone eine gewisse Mindestüberlappung mit der Kontur des Profils 16 aufweisen. Andernfalls würde das Dekormaterial nicht ausreichend angedrückt, und die Andruckrolle müsste verworfen werden.

Ebenso werden alle Andruckrollen verworfen, die so breit sind, dass sie das Profil 16 auch jenseits des Endpunktes P2 berühren würden.

Unter den Andruckrollen, die diese Kriterien erfüllen, wird dann diejenige ausgewählt, bei der die Hilfslinie 58 zwischen P1 und P2 am wenigsten von der tatsächlichen Kontur des Profils 16 abweicht. Die Abweichung kann beispielsweise nach der Methode der kleinsten Abstandsquadrate bestimmt werden.

Das oben beschriebene Verfahren liefert nicht nur die am besten geeignete Andruckrolle, sondern auch die optimale Positionierung dieser Andruckrolle in Y- und Z-Richtung sowie die optimale Achsneigung.

Das Datenverarbeitungssystem 40 ist so leistungsfähig, dass die nötigen Berechnungen in sehr kurzer Zeit vorgenommen werden können. Außerdem können diese Berechnungen bereits durchgeführt werden, bevor der eigentliche Umrüstvorgang beginnt, so dass sie nicht zu einer Verlängerung der Rüstzeiten führen.

In einer modifizierten Ausführungsform kann das Gestell 22 (Fig. 1) für jede der Rollenpositionen 26a - 26d (auf jeder Seite der Förderstrecke 14) eine stationäre Rollenaufnahme (nicht gezeigt) aufweisen, die als Zwischenablage für die Andruckrollen 20 dient. Das erlaubt es, den Umrüstprozess vorzubereiten, während der Ummantelungsprozess für das vorherige Profil noch andauert. Der Umlaufförderer 30 wird dann in der oben beschriebenen Weise so angesteuert, dass die ausgewählten Andruckrollen nacheinander zu den zugehörigen Rollenpositionen transportiert werden. Die Andruckrollen werden nun aber nicht unmittelbar in die Halter 24 eingesetzt, sondern zunächst auf der stationären Rollenaufnahme zwischengelagert. Wenn dann der eigentliche Umrüstprozess beginnt, stehen alle benötigten Andruckrollen bereits in den Zwischenablagen bereit, und zum Auswechseln der Andruckrollen können mehrere Personen eingesetzt werden, die gleichzeitig an mehreren Rollenpositionen arbeiten, so dass die Dauer des Umrüstprozesses weiter verkürzt werden kann.

## Patentansprüche

1. Vorrichtung zum Umrüsten von Profilummantelungsmaschinen (10), die eine Förderstrecke (14) für zu ummantelnde Profile (16) und für jede von mehreren längs der Förderstrecke (14) angeordneten Rollenpositionen (26a - 26d) einen einstellbaren Halter (24) für eine auswechselbare Andruckrolle (20) aufweisen, welche Vorrichtung ein Magazin (28) mit einer Vielzahl von Rollenaufnahmen (36) für in die Halter (24) einzusetzende Andruckrollen (20) aufweist, **dadurch gekennzeichnet, dass** das Magazin (28) mindestens einen längs der Förderstrecke (14) verlaufenden Umlaufförderer (30) aufweist, mit dem die Rollenaufnahmen (36) in verschiedene Rollenpositionen (26a - 26d) verfahrbar sind, und dass die Vorrichtung ein Datenverarbeitungssystem (40) aufweist, das dazu eingerichtet ist, Eigenschaften der in den Rollenaufnahmen (36) aufgenommenen Andruckrollen (20) zu speichern, Daten, die die Geometrie des zu ummantelnden Profils (16) spezifizieren, zu empfangen und die Eigenschaften der in den verschiedenen Rollenpositionen (26a - 26d) einzusetzenden Andruckrollen (20) anhand der Geometrie des Profils zu bestimmen und den Umlaufförderer (30) so anzusteuern, dass den Rollenpositionen (26a - 26d) nacheinander die Andruckrollen (20) mit den in dieser Rollenposition benötigten Eigenschaften zugeführt werden.

2. Vorrichtung nach Anspruch 1, bei der der Umlaufförderer (30) mittig unterhalb oder oberhalb der Förderstrecke (14) angeordnet ist.

3. Vorrichtung nach Anspruch 1 oder 2, bei der der Umlaufförderer (30) eine endlose Kette (34) aufweist, die über Kettenräder (32) mit vertikaler Drehachse läuft und die an ihrer Oberseite die Rollenaufnahmen (36) trägt.

4. Vorrichtung nach einem der vorstehenden Ansprüche, mit mindestens einer Anzeigeeinrichtung (44), die es bei einem Halt des Umlaufförderers (30) erlaubt, für eine der Rollenpositionen (26a - 26d) diejenige Rollenaufnahme (36) zu kennzeichnen, von der die Andruckrolle (20) in den Halter (24) umzusetzen ist, und/oder diejenige leere Rollenaufnahme (36) zu kennzeichnen, auf welche die aus dem Halter (24) entnommene Andruckrolle umzusetzen ist.

5. Vorrichtung nach einem der vorstehenden Ansprüche, mit einem durch das Datenverarbeitungssystem (40) angesteuerten Bildschirm (46) zur Anzeige von Soll-Einstellungen der Halter (24) für die einzelnen Rollenpositionen (26a - 26d).

6. Vorrichtung nach einem der vorstehenden Ansprüche, bei der an dem Umlaufförderer (30) mindestens eine Abtasteinrichtung (42) angeordnet ist, die dazu eingerichtet ist, die Profilformen der in den Rollenaufnahmen (36) aufgenommenen Andruckrollen (20) abzutasten.

7. Verfahren zum Umrüsten von Profilummantelungsmaschinen (10), die eine Förderstrecke (14) für zu ummantelnde Profile (16) und für jede von mehreren längs der Förderstrecke angeordneten Rollenpositionen (26a - 26d) einen einstellbaren Halter (24) für eine auswechselbare Andruckrolle (20) aufweisen, mit den folgenden Schritten:
- Eingabe der Geometrie des zu ummantelnden Profils (16) in ein Datenverarbeitungssystem,
- Messen und Speichern der Profilformen mehrerer Andruckrollen (20), und
- für jede Rollenposition (26a - 26d): Auswahl einer der mehreren Andruckrollen (20) durch das Datenverarbeitungssystem (40), auf der Grundlage eines Vergleichs der gemessenen Profilformen mit der eingegebenen Geometrie.

8. Verfahren nach Anspruch 7, bei dem das Datenverarbeitungssystem (40) im Zusammenhang mit der Auswahl der Andruckrollen (20) auch Soll-Einstellungen der Halter (24) festlegt.

## Claims

1. Apparatus for reconfiguring profile coating machines (10), said machines having a conveyer path (14) for profiles (16) to be coated, and, for each of a plurality of roller positions (26a - 26d) disposed along the conveyer path (14), an adjustable holder (24) for an exchangeable pressure roller (20), said apparatus comprising a magazine (28) having a plurality of roller sockets (36) for pressure rollers (20) to be inserted into the holders (24), **characterized in that** the magazine (28) comprises at least one endless conveyer (30) that extends along the conveyer path (14) and is adapted to move the roller sockets (36) into different roller positions (26a - 26d), and **in that** the apparatus has a data processing system (40) adapted to store properties of the pressure rollers (20) received in the roller sockets (36), to receive data specifying the geometry of the profile (16) to be coated, and to determine the properties of the pressure rollers (20) to be inserted in the different roller positions (26a - 26d) on the basis of the geometry of the profile, and to control the endless conveyer (30) such that the roller positions (26a - 26d) are successively supplied with pressure rollers (20) having the properties required for the respective roller positions.

2. Apparatus according to claim 1, wherein the endless conveyer (30) is disposed centrally below or above the conveyer path (14).

3. Apparatus according to claim 1 or 2, wherein the endless conveyer (30) comprises an endless chain (34) that passes over sprockets having vertical axes of rotation, the chain carrying the roller sockets (36) on its top side.

4. Apparatus according to any of the preceding claims, comprising at least one display device (44) adapted to indicate, at each stop of the endless conveyer (30), for one of the roller positions (26a - 26d), the one of the roller sockets (36) from which the pres-pressure roller is to be taken and to be inserted into the holder (24), and/or an empty roller socket (36) into which the pressure roller taken from the holder (24) is to inserted.

5. Apparatus to any of the preceding claims, comprising a monitor screen (46) controlled by the data processing system (40) for displaying target adjustment positions of the holders (24) for the individual roller positions (26a - 26d).

6. Apparatus according to any of the preceding claims, wherein the endless conveyer (30) is provided with at least one scanner (42) adapted to scan the profile shapes of the pressure rollers (20) received in the roller sockets (36).

7. A method of reconfiguring profile coating machines (10), which coating machines have a conveyer path (14) for profiles (16) to be coated, and, for each of a plurality of roller positions (26a - 26d) disposed along the conveyer path, an adjustable holder (24) for an exchangeable pressure roller (20), the method comprising the steps of:
- entering the geometry of the profile (16) to be coated into a data processing system,
- measuring and storing the profile shapes of several pressure rollers (20), and
- for each roller position (26a - 26d): the data processing system (40) selecting a pressure roller (20) from said plurality of pressure rollers on the basis of a comparison of the measured profile shapes with the entered geometry.

8. Method according to claim 7, wherein the data processing system determines also target adjustment positions of the holders (14) in conjunction with the selection of the pressure rollers (20).

## Revendications

1. Dispositif destiné à modifier des machines d'enrobage de profilés (10) comportant un trajet de transport (14) pour des profilés à enrober (16) et, pour chacune des positions de galets (26a - 26d) disposées le long du trajet de transport (14), un support réglable (24) pour un galet presseur interchangeable (20), lequel dispositif comporte un magasin (28) ayant une pluralité d'organes récepteurs de galets (36) pour les galets presseurs (20) à mettre en place dans le support (24), **caractérisé en ce que** le magasin (28) comporte au moins un convoyeur sans fin (30) s'étendant le long du trajet de transport (14), au moyen duquel les organes récepteurs de galets (36) peuvent être déplacés dans différentes positions de galets (26a - 26d), et **en ce que** le dispositif comporte un système de traitement de données (40) qui est configuré de manière à enregistrer des caractéristiques des galets presseurs (20) reçus dans les organes récepteurs de galets (36), à recevoir des données qui spécifient la géométrie du profilé à enrober (16), et à déterminer les caractéristiques des galets presseurs (20) à mettre en place dans les différentes positions de galets (26a - 26d) au moyen de la géométrie du profilé, et à commander le convoyeur sans fin (30) de telle sorte que les galets presseurs (20) ayant les propriétés requises dans cette position de galet sont amenés dans les positions de galets (26a - 26d) les uns après les autres.

2. Dispositif selon la revendication 1, dans lequel le convoyeur sans fin (30) est agencé de manière centrée au-dessous ou au-dessus du trajet de transport (14).

3. Dispositif selon la revendication 1 ou 2, dans lequel le convoyeur sans fin (30) comporte une chaîne sans fin (34) qui s'étend au-dessus de pignons (32) ayant un axe de rotation vertical et qui supporte les organes récepteurs de galets (36) sur sa partie supérieure.

4. Dispositif selon l'une des revendications précédentes, comportant au moins des moyens d'affichage (44) qui, lorsque le convoyeur sans fin (30) est à l'arrêt, permettent d'indiquer, pour l'une des positions de galets (26a - 26d), l'organe récepteur de galet (36) à partir duquel le galet presseur (20) doit être transféré dans le support (24), et/ou d'indiquer l'organe récepteur de galet vide (36) sur lequel le galet presseur retiré du support (24) doit être transféré.

5. Dispositif selon l'une des revendications précédentes, comportant un écran (46) commandé par le système de traitement de données (40) de manière à afficher des réglages de consigne du support (24) pour les positions de galets (26a - 26d) individuelles.

6. Dispositif selon l'une des revendications précédentes, dans lequel au moins des moyens de balayage (42) sont agencés sur le convoyeur sans fin (30), lesquels moyens de balayage sont configurés de manière à balayer les formes de profilés des galets presseurs (20) reçus dans les organes récepteurs de galets (36).

7. Procédé destiné à modifier des machines d'enrobage de profilés (10) comportant un trajet de transport pour des profilés à enrober (16) et, pour chacune des positions de galets (26a - 26d) disposées le long du trajet de transport (14), un support réglable (24) pour un galet presseur interchangeable (20), comportant les étapes suivantes consistant à :
- entrer la géométrie du profilé à enrober (16) dans un système de traitement de données,
- mesurer et enregistrer les formes de profilés de plusieurs galets presseurs (20), et
- pour chaque position de galet (26a - 26d) : sélectionner l'un des galets presseurs (20) par l'intermédiaire du système de traitement de données (40) sur la base d'une comparaison entre les formes de profilés mesurées et la géométrie entrée.

8. Procédé selon la revendication 7, dans lequel le système de traitement de données (40) fixe également des réglages de consigne du support (24) en rapport avec la sélection des galets presseurs (20).
